# EUROPEAN PATENT APPLICATION

(11) **EP 2 209 234 A1**
(43) Date of publication of application: **21.07.2010**
(21) Application number: 09100041.4
(22) Date of filing: 14.01.2009
(51) Int. Cl.: H04B 10/207, H04L 9/08

(54) **Method and device for data processing in an optical network**

(71) Applicant: Nokia Siemens Networks OY, 02610 Espoo (FI)
(72) Inventor: Rohde, Harald Dr., 81673, München (DE)
(74) Representative: Bruglachner, Thomas E.

(57) **Abstract**

A method and a device for data processing in an optical network, are provided wherein an OLT encrypts the data utilizing a key that is provided by an ONU and wherein the OLT sends the encrypted data to the ONU.

## Description

The invention relates to a method and to a device for data processing in an optical network and to a system comprising such a device.
A Passive Optical Network (PON) is an access system which connects Optical Network Units (ONUs) placed in the homes or offices of subscribers with an Optical Line Terminal (OLT) placed at a central point, e.g. in the central office of a telephone service provider. ONUs and OLTs are interconnected via fibres and at least one passive optical splitter. The system offers data access to the subscriber in a flexible and cost effective way.

The fibre capacity in the direction from the ONUs to the OLT is shared by all subscribers in a Time Division Multiplexing (TDM) way: Upon a grant message from the OLT the ONU transmits its data in a time window which has been assigned to it. The data which the ONU sends are invisible to the other ONUs, because the ONU signals are collected by the splitter and are sent to the OLT without significant backscattering.

The fibre capacity in the direction from the OLT to the ONUs is shared by all subscribers in a broadcast way: The OLT sends all data frames to all ONUs, and each ONU selects the packets addressed to itself and extracts its data. Since all ONUs receive everybody's data, there is the risk that an illegally manipulated ONU or any other device at the site of a subscriber may read the data of another subscriber. In order to prevent the non-authorized subscriber from becoming aware of the payload data of other subscribers, downstream data often are encrypted. Typical encryption algorithms of high quality today are, e.g., the Advanced Encryption Standard (AES), or the RSA algorithm, named after Rivest, Shamir and Adleman.

There are two shortcomings in this approach:
- Before establishing such an encrypted data exchange it is necessary to transfer a key between the subscriber and the central office in a secure way.
- The encryption with one of the established algorithms like AES or RSA requires a significant hardware effort on both sides of the encrypted link, for encryption and for decryption purposes.

The problem to be solved is to overcome the disadvantages as set forth above and in particular to provide for an efficient encryption of data in an optical network.
This problem is solved according to the features of the independent claims. Further embodiments result from the depending claims.

In order to overcome this problem, a method for the data processing in an optical network is provided
- wherein an OLT encrypts the data utilizing a key that is provided by an ONU;
- wherein the OLT sends the encrypted data to the ONU.

It is noted that said OLT may be any component of said optical network providing data towards at least one ONU, i.e. at least one optical network unit that may be connected to the OLT via at least one fibre, in particular via at least one splitter.

Said key may be any data utilized for encryption purposes. The key may be data that is repeatedly used or it may be used only once. The key may in particular be applicable to encrypt a portion of the data to be conveyed from the OLT to the ONU.

It is also noted that the OLT may supply several ONUs by applying the solution suggested herein.

Hence, the approach provided efficiently utilizes the asymmetric characteristics of the communication channel for optical access systems like PONs: While downstream data is distributed to all connected users, upstream data can be received only by the OLT, not by any other ONU.

In an embodiment, the key is generated by the ONU and sent to the OLT.

In another embodiment, the key is changed on a timely basis, and/or with each portion of data to be conveyed.

In particular, the key may not be changed at all, e.g., for a predetermined period of time.

In a further embodiment, the key comprises or is associated with a data stream provided by the ONU.

Said data stream may be a random or a pseudo-random data stream. In may in particular be a substantially continuous data stream.

In a next embodiment, the data stream or a portion thereof is used as a one-time pad.

According to another embodiment, the encryption is performed by simply applying an exclusive or (XOR) operation between the data to be sent and the key data. This is especially advantageous in case of a one-time pad key.

It is also an embodiment that the data stream generated by the ONU is modified by at least one linear feedback shift register in particular before the OLT encrypts the data.

Pursuant to another embodiment, the encrypted data stream generated by the OLT is modified by at least one linear feedback shift register.

The problem stated above is also solved by a device comprising a and/or being associated with a processor unit and/or a hard-wired circuit and/or a logic device that is arranged such that the method as described herein is executable thereon.

According to an embodiment, the device is a communication device, in particular a or being associated with an optical network element.

The problem stated supra is further solved by a communication system comprising the device as described herein.

The approach provided uses the upstream security by sending to the OLT the key with which the downstream data can be encrypted.

The key may be a classical key for, e.g., an AES encryption, where for a secure encryption a minimum of 128 bit can be recommended, or for an RSA encryption, where for a secure encryption a minimum of 1024 bit is recommended. The key may be changed frequently or with every portion of data to be encrypted. The key may also be used for a predefined period of time or it may be a permanent key.

Instead of individual keys the ONU may also send upstream a continuous data stream which may be used by the OLT for the encryption of the downstream data only once, as a one-time key or "one-time pad". If the key or "pad" is as long as the plaintext, is truly random, never reused and kept sekret, the encryption with a one-time pad provides perfect secrecy. The encryption itself may be performed in a stream cipher way, e.g., by simply applying an exclusive or (XOR) operation on the data to be sent and by the data stream sent by the ONU.

In other implementations the key that may be provided as data stream could be modified by using at least one linear feedback shift register, or the encrypted data may be modified by using at least one linear feedback shift register, or both.

The one-time pad data is sent in data packets, each packet may comprise a unique identifier (i.e. a packet number). In the downstream traffic, the OLT may send the identifier of the used one-time pad and the ONU may decrypt the traffic with the respective packet which could be stored in its internal memory.

The approach provided can be realized by software-implementation, an additional hardware effort may comprise providing some memory, although the ONU controller's RAM may suffice for storing the one-time pads. Advantageously, the approach suggested may cope without additional hardware expenditures.

The approach provided efficiently secures a communication between the OLT and the ONU such that an eavesdropper who is located at another ONU cannot understand or decrypt their communication.

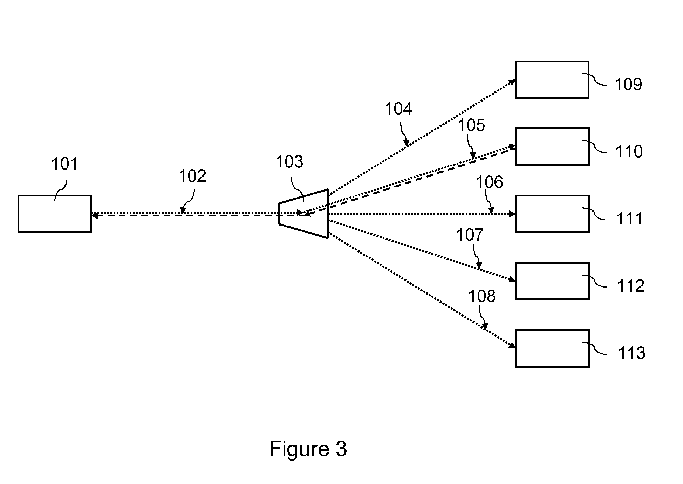

Embodiments of the invention are illustrated in the following figures:

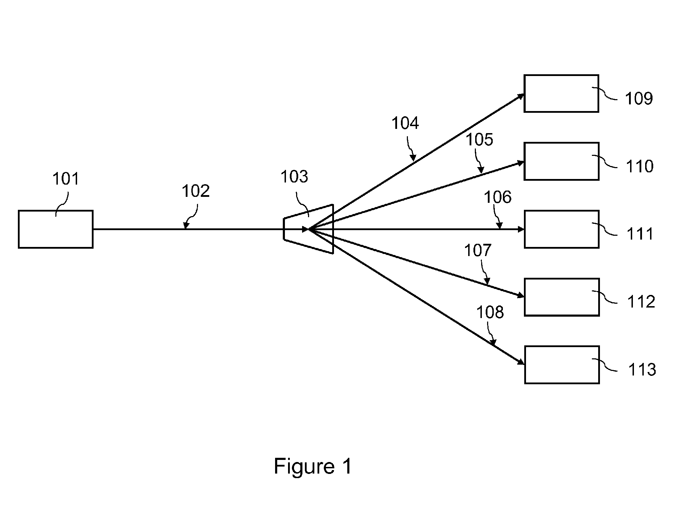

**Figure 1** shows an OLT 101 that is connected via a fibre 102 to a splitter 103. Said splitter 103 is connected via several fibres 104 to 108 to ONUs 109 to 113. The downstream data are sent from the OLT to the splitter and are distributed by the splitter to all ONUs.

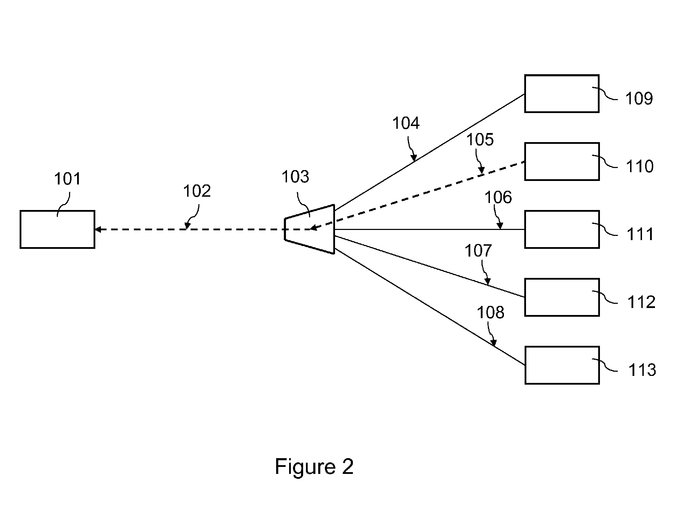

**Figure 2** illustrates how the data from the ONUs are aggregated by the splitter and are guided to the OLT. The active ONU 110 to which a transmission time slot has been granted is sending its upstream data via fibre 105 to the splitter and via fibre 102 further to the OLT. The fibres 104, 106, 107 and 108 of the other ONUs 109, 111, 112 and 113 are not active at this time. None of the ONUs 109, 111, 112 and 113 can receive the signal of the transmitting ONU 110.
According to **Figure 3** the ONU 110 to which the downstream data are destined sends to the OLT the key with which the downstream data shall be encrypted in the OLT. The OLT encrypts the downstream user data as requested and sends the encrypted data to the ONU 110. The other ONUs 109, 111, 112, and 113 can also receive the encrypted data, but only the ONU 110 has the key and can decrypt and read the data.

### Abbreviations:

- AES: advanced encryption standard
- OLT: optical line termination
- ONU: optical network unit
- PON: passive optical network
- RAM: random access memory
- RSA: Rivest, Shamir and Adleman algorithm
- TDM: time division multiplex
- XOR: exclusive or

## Claims

1. A method for the data processing in an optical network,
- wherein an OLT encrypts the data utilizing a key that is provided by an ONU;
- wherein the OLT sends the encrypted data to the ONU.

2. The method according to claim 1, wherein the key is generated by the ONU and sent to the OLT.

3. The method according to any of the preceding claims, wherein the key is changed on a timely basis, and/or with each portion of data to be conveyed.

4. The method according to any of the preceding claims, wherein the key comprises or is associated with a data stream provided by the ONU.

5. The method according to claim 4, wherein the data stream generated by the ONU is modified by at least one linear feedback shift register before it is used as a key in the OLT.

6. The method according to claim 4 or 5, wherein the encryption itself is performed by applying an exclusive or (XOR) operation on the data to be sent by the data stream provided by the ONU.

7. The method according to any of the preceding claims, wherein the encrypted data is further modified by at least one linear feedback shift register.

8. A device for data communication comprising a processor unit that is arranged such that the method claimed by any of the preceding claims can be executed on said processor unit.

9. The device according to claim 8, wherein said device is a communication device, in particular an optical network element.

10. Communication system comprising the device according to claim 8 or 9.
